# EUROPÄISCHE PATENTSCHRIFT

(11) **EP 0 698 685 B1**
(45) Veröffentlichungstag und Bekanntmachung des Hinweises auf die Patenterteilung: **29.11.2000**
(21) Anmeldenummer: 95112562.4
(22) Anmeldetag: 10.08.1995
(51) Int. Cl.: E01B 1/00, E01B 25/00

(54) **Verfahren und Vorrichtung zum lagegenauen Einbringen von Befestigungsmitteln in Anschlusskörper einer Tragkonstruktion von Fahrwegen für spurgebundene Transportsysteme, insbesondere Magnetschwebebahnen**
Method and device for precise placing of fastening means in a support structure for trackbound transport systems, in particular for magnetic levitated vehicles
Procédé et dispositif de positionnement des moyens de fixation dans une structure de support pour véhicules, en particulier pour véhicules à lévitation ferroviaires magnétique

(30) Priorität: 11.08.1994 DE 4428376
(43) Veröffentlichungstag der Anmeldung: 28.02.1996
(73) Patentinhaber: Thyssen Transrapid System GmbH, 34127 Kassel (DE)
(72) Erfinder: Raschbichler, Hans George, Dipl. Ing., D-85521 Ottobrunn (DE); Miller,Luitpold, Ing., D-85521 Ottobrunn (DE); Rosin, Christian, Dipl. Ing., D-86934 Reichling (DE)
(74) Vertreter: Dahlkamp, Heinrich-Leo, Dipl.-Ing.

(56) Entgegenhaltungen:
- EP-A- 0 151 283
- DE-A- 3 705 773
- DE-C- 3 716 260
- DE-C- 3 825 508
- FR-A- 2 170 301

## Beschreibung

Die Erfindung betrifft ein Verfahren und eine Vorrichtung zum lagegenauen Einbringen von Befestigungsmitteln in Anschlußkörper eine Tragkonstruktion von Fahrwegen für spurgebundene Transportsysteme, insbesondere Magnetschwebebahnen, gemäß den Oberbegriffen der Ansprüche 1 und 6.

Fahrwege für spurgebundene Transportsysteme, insbesondere von Magnetschwebebahnen, weisen eine Vielzahl von Funktionskomponenten, wie Ausrüstungsteile zum Tragen, Führen und Bewegen des Fahrzeuges und Einrichtungen für die Informationsübermittlung und den Energieaustausch zwischen Fahrzeug und Fahrweg auf. Diese Komponenten müssen zueinander und zu dem sich vergleichsweise schnell bewegenden Fahrzeug in definierter Lage sein.

Aus dem Stand der Technik sind verschiedene Möglichkeiten bekannt, um die Forderung nach einer lagegenauen Positionierung von Ausrüstungsteilen und Funktionskomponenten an Fahrwegträgern für spurgebundene Transportsysteme zu erfüllen.

So können nach der DE-OS 27 15 717 für eine Positionierung und Befestigung der Fahrwegausrüstung justierbare Schraubverbindungen zum Einsatz gelangen, die fertigungsbedingt entstandene Toleranzen in der Lage der im Fahrweg befindlichen Befestigungsmittel ausgleichen.

Desweiteren ist der Zeitschrift für Eisenbahnwesen und Verkehrstechnik Glasers Annalen, 105 (1981), Nr. 7/8, Seite 210, zu entnehmen, daß eine genaue Positionierung von Ausrüstungsteilen zu erreichen ist, indem Befestigungsbolzen in definierter Lage in die Tragkonstruktion des Fahrweges eingegossen werden.

Vorgenannten Lösungen ist ein erheblicher, insbesondere in der aufwendigen Justierung von Befestigungs- bzw. Verbindungselementen begründeter, Nachteil gemeinsam.

Nach der in der EP 0 151 283 B1 enthaltenen Lehre werden in einem der Fertigung der Tragkonstruktion nachgeschalteten Arbeitsgang die an der Tragkonstruktion befindlichen Anschlußkörper mit maßgenauen Durchgangslöchern und/oder Ansenkungen versehen. Hierdurch ist eine stark vereinfachte Montage der Ausrüstungsteile der Tragkonstruktion möglich.

Des weiteren sind aus der DE 38 25 508 C1 ein Verfahren zur Justierung und Befestigung von Funktionsflächen eines Fahrwegs einer elektromagnetischen Schnellbahn und eine Vorrichtung zur Durchführung des Verfahrens bekannt. Hierbei werden nach der Justierung und Befestigung der Statoren die Seitenführungsschienen in den für den Einbau erforderlichen Abstand voneinander gebracht, in bezug auf den Fahrwegträger positioniert und unter Bezugnahme auf die Statorunterkante und am Fahrwegträger angebrachter Meßpunkte in Querrichtung justiert und am Fahrwegträger befestigt. Eine vergleichbare Lösung findet sich in der DE 37 16 260 C1. Auch hier sind die Seitenführungsschienen mit der erforderlichen Genauigkeit am Fahrwegträger zu positionieren.

Der Erfindung liegt die Aufgabe zugrunde, eine weitere Vereinfachung beim Einbringen von Befestigungsmitteln in die Tragkonstruktion des Fahrweges eines spurgebundenen Fahrzeuges herbeizuführen.

Erfindungsgemäß wird diese Aufgabe bei einem gattungsgemäßen Verfahren derart gelöst, daß in Vorbereitung des Einbringens der Befestigungsmittel in die Tragkonstruktion die tatsächliche räumliche Lage der Tragkonstruktion bestimmt wird, daß diese Lage mit der Fertigungslage der Tragkonstruktion verglichen und aus beiden Raumlagen eine Differenzlage ermittelt wird, daß weiterhin aus dieser Differenzlage die Lageänderung der Anschlußorte der einzubringenden Befestigungsmittel im Vergleich zu den bei der Fertigung der Tragkonstruktion festgelegten Anschlußorten bestimmt wird, wonach korrigierte Koordinaten der Anschlußorte der Befestigungsmittel generiert werden.

Weiterhin besteht die Lösung vorgenannter Aufgabe bei einer gattungsgemäßen Vorrichtung darin, daß an der Tragkonstruktion und/oder der Bearbeitungseinheit Kopplungselemente derart vorgesehen sind, daß die zu bearbeitende Tragkonstruktion als Widerlager für die Bearbeitungseinheit bei deren Positionierung mittels einer Ortungs- und Meßeinheit in den Anschlußorten wirkt.

Mit der Erfindung ist der Vorteil verbunden, daß zum Einbringen der Befestigungsmittel in die Tragkonstruktion eine vom späteren Verlegeort bestimmte Positionierung der Tragkonstruktion nicht erforderlich ist. Desweiteren besteht infolge der erfindungsgemäß vorgesehenen Kopplung von Tragkonstruktion und Bearbeitungsmitteln die Möglichkeit, die Bearbeitung der Tragkonstruktion direkt an der Trasse vorzunehmen, ggf. in einer Halle, an die nur geringe Anforderungen hinsichtlich der notwendigen Infrastruktur zu stellen sind. So kommt beispielsweise den Fundamenten, auf denen die Tragkonstruktion lagert, zwar eine tragende, nicht aber eine justierende Funktion zu. Einer durch das Eigengewicht der Bearbeitungseinheit verursachten Verformung der Tragkonstruktion kann in einfacher Weise durch Abstützen des Untergurtes der unbelasteten Tragkonstruktion entgegengewirkt werden.

In zweckmäßiger Durchführung des Verfahrens werden bei der Fertigung der Tragkonstruktion des Fahrweges an der Tragkonstruktion Referenzstellen festgelegt, so daß über Distanz- und Neigungsmessung die Bestimmung der jeweiligen Ist-Lage der Tragkonstruktion für weitere Bearbeitungs- und ggf. Montageprozesse erfolgen kann. Somit sind die Ergebnisse der Abnahmemessung der Tragkonstruktion nach erfolgter Fertigung als Basis für die Berechnung der Bearbeitungsparameter verwendbar.

Bei Einsatz von Bearbeitungseinheiten, die einen relativ zu einem Grundrahmen bewegbaren Bearbeitungskopf tragen, ist es zweckmäßig, die Differenzlage des Grundrahmens zu dem theoretisch ermittelten Anschlußort zu bestimmen und den Bearbeitungskopf relativ zum Grundrahmen in die Bearbeitungsposition zu bringen. Bei einer solchen Verfahrensdurchführung kann auf eine exakte Positionierung des gegenüber dem Bearbeitungskopf vergleichsweise massereichen Grundrahmens in den Bearbeitungsorten verzichtet werden. Es ist vielmehr ausreichend, den Grundrahmen nahe einem Bearbeitungsort zu positionieren, um nachfolgend den Bearbeitungskopf durch Verschiebung auf den Grundrahmen in eine exakte Bearbeitungslage zu bringen.

Hierbei ist es zweckmäßig, auf dem Grundrahmen der Bearbeitungseinheit Referenzflächen festzulegen, so daß über eine Distanz- und Neigungsmessung zu diesen Referenzflächen die Bestimmung der jeweiligen Ist-Lage des Grundrahmens für den betreffenden Bearbeitungsprozeß erfolgen kann.

Um eine effiziente Bearbeitung mehrerer, auf einer Tragkonstruktion befindlicher Anschlußorte zu ermöglichen, kann die Bearbeitungseinheit auf der Tragkonstruktion des Fahrweges verschoben und zum Einbringen der Befestigungsmittel mit der Tragkonstruktion verspannt werden.

Für eine Vereinfachung der Bewegungsabläufe zur Positionierung der Bearbeitungsköpfe weist die Bearbeitungseinheit bevorzugt einen Grundrahmen und einen relativ zum Grundrahmen verfahrbaren, mit Werkzeugen versehenen Bearbeitungskopf auf.

Die Erfindung wird nachstehend anhand von Zeichnungen, die bevorzugte Ausführungen der Erfindung darstellen, näher erläutert.

Es zeigen:
- **Fig. 1**: eine Bearbeitungseinheit auf einer Tragkonstruktion eines Fahrweges in Seitenansicht und Draufsicht,
- **Fig. 2**: eine Vorderansicht gemäß Fig. 1 und
- **Fig. 3**: eine Tragkonstruktion im Querschnitt mit an dieser befestigten Statorpaketen.

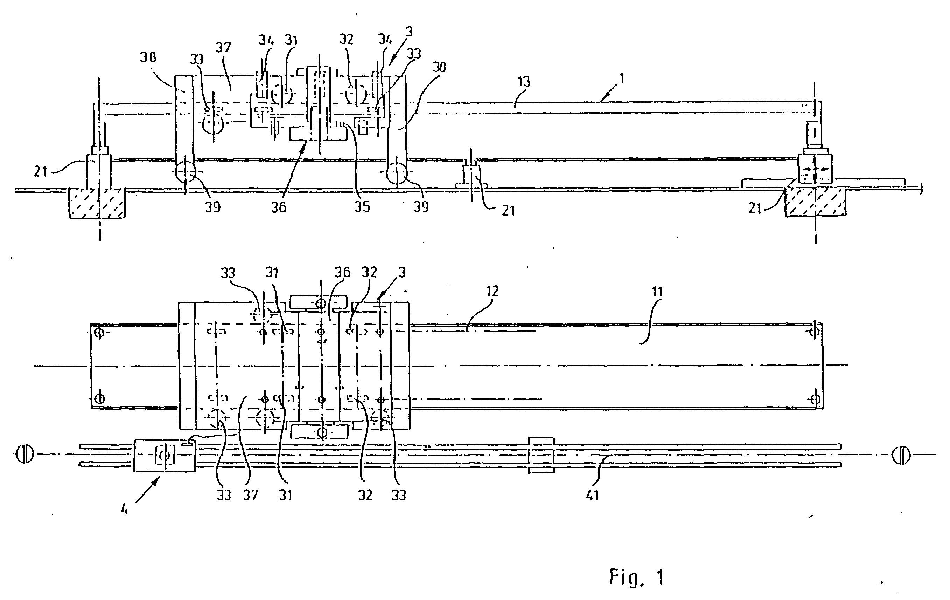

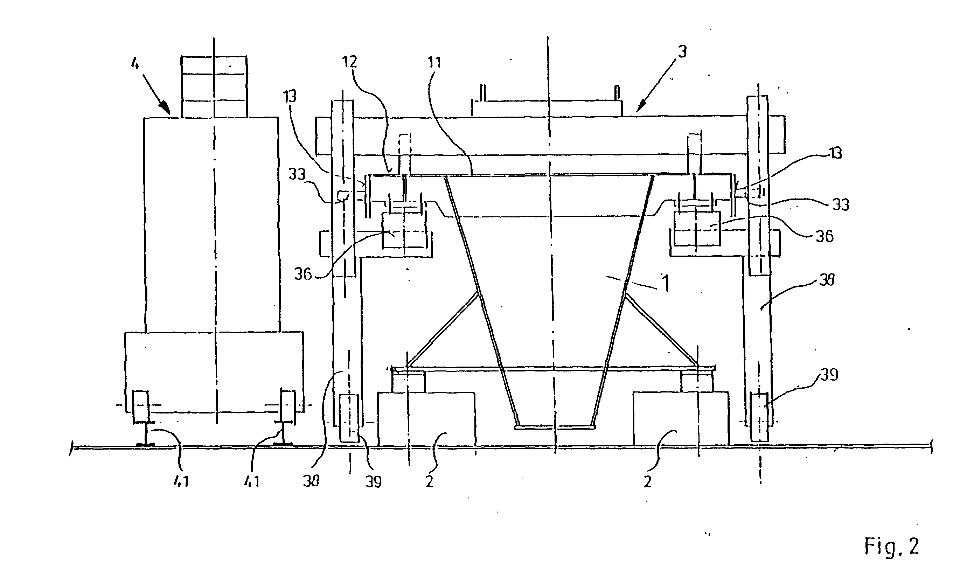

Der in Fig. 2 in seiner Querschnittsform dargestellte Fahrwegträger 1 wird nach oben durch ein Deckblech 11 mit Gleitebenen 12 abgeschlossen (Fig. 1). Seitlich am Fahrwegträger 1 ist jeweils eine Seitenführschiene 13 vorgesehen.

Der Fahrwegträger 1 befindet sich in Vorbereitung des Einbringens von Befestigungsmitteln, wie beispielsweise Bohrungen oder Ansenkungen, in einer Trägeraufnahmevorrichtung 2, die aus mehreren, über die Länge des Fahrwegträgers 1 verteilten Trägeraufnahmen 21 besteht. Die Abstände der Trägeraufnahmen 21 sind zweckmäßig derart gewählt, daß das Eigengewicht der Bearbeitungseinheit unabhängig von der jeweiligen Positionierung derselben aufgenommen wird.

Auf dem Fahrwegträger 1 sitzt eine Bearbeitungseinheit 3, die mittels Antriebsrollen 31, Nachlaufrollen 32 und Führungsrollen 33 auf dem Fahrwegträger 1 verschiebbar ist. Dabei bewegen sich die Antriebsrollen 31 und die Nachlaufrollen 32 auf den Gleitebenen 12 des Deckbleches 11. Die Seitenführung der Bearbeitungseinheit 3 wird gewährleistet, indem die Führungsrollen 33 über eine Spannvorrichtung in ständigem Kontakt zu den Seitenführungsschienen 13 gehalten werden. Infolge einer exakten Positionierung der Seitenführungsschienen 13 besteht keine Notwendigkeit für eine Verschiebung der Bearbeitungseinheit 3 quer zur Tragkonstruktion.

Die Bearbeitungseinheit 3 weist weiterhin Hydraulikzylinder 34 auf. Bei Betätigung dieser Hydraulikzylinder 34 zur Positionierung der Bearbeitungseinheit 3 in Vorbereitung des Einbringens von Befestigungsmitteln in den Fahrwegträger 1 wird die Bearbeitungseinheit 3 in Bearbeitungsrichtung formschlüssig gegen den Fahrwegträger 1 gepreßt. Hierdurch ist es möglich, die für das Einbringen der Befestigungsmittel notwendigen, erheblichen Kräfte auf direktem Weg auf den Fahrwegträger 1 zu übertragen. Desweiteren müssen bei einer solchen Bearbeitung äußere, auf den Fahrwegträger 1 wirkende Einflüsse keine Berücksichtigung finden.

Auf der Bearbeitungseinheit 3 ist ein mit Werkzeugen 35 bestückter Bearbeitungskopf 36 relativ zu einem Grundrahmen 37 der Bearbeitungseinheit 3 verschiebbar, so daß die Anforderungen an die Positioniergenauigkeit der gesamten Bearbeitungseinheit 3 vergleichsweise gering gehalten werden können.

Desweiteren weist die Bearbeitungseinheit 3 teleskopierbare Stützen 38 auf, an deren unteren Enden Rollen 39 vorgesehen sind. Zur Entkopplung von Bearbeitungseinheit 3 und Fahrwegträger 1 werden die Stützen 38 ausgefahren, womit eine beliebig verfahrbare Bearbeitungseinheit 3 entsteht, die zur Bearbeitung von an verschiedenen Orten befindlichen Fahrwegträgern 1 geeignet ist.

Parallel zum Fahrwegträger 1 erstreckt sich ein Profilkörper 41, auf dem eine Ortungs- und Meßeinheit 4 verschiebbar angeordnet ist. Die Ortungs- und Meßeinheit 4 verfügt über ein Distanz- und Neigungsmeßmodul, einen Mikroprozessor zur Datenverarbeitung und eine Einrichtung zur Datenübertragung zwischen der Ortungs- und Meßeinheit 4 und der Bearbeitungseinheit 3.

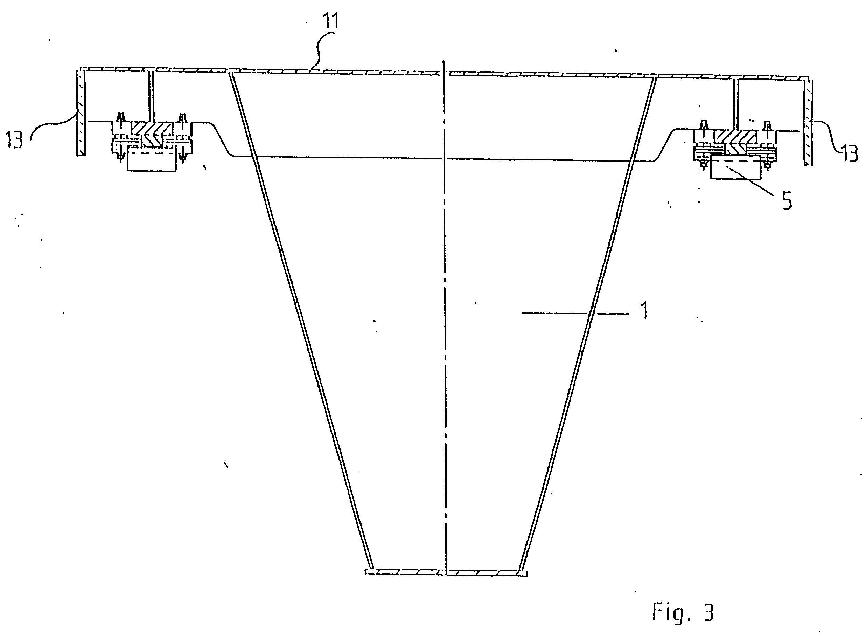

Zum Einbringen der Befestigungsmittel wird die Ist-Lage des in der Trägeraufnahmevorrichtung 2 befindlichen Fahrwegträgers 1 bestimmt. Hierzu erfolgt über die Ortungs- und Meßeinheit 4 eine Entfernungs- und Neigungsmessung zu auf dem Fahrwegträger 1 angeordneten Ortungsscheiben. Über Koordinatentransformation berechnet der Mikroprozessor der Ortungs- und Meßeinheit 4 die Soll-Lage der Ausrüstungsteile, hier der Statorpakete 5 (Fig. 3), und überträgt die entsprechenden Daten dem Rechner der Bearbeitungseinheit 3. Diese fährt daraufhin zu einem ersten, zu bearbeitenden Anschlußort für ein Statorpaket 5. Die Bewegung der Bearbeitungseinheit 3 und damit die Veränderung ihrer Koordinaten im Raum wird von der Ortungs- und Meßeinheit 4 durch Entfernungs- und Neigungsmessung zu den auf der Bearbeitungseinheit 3 befindlichen Ortungsscheiben in deren Microprozessor erfaßt und dem Rechner der Bearbeitungseinheit 3 übermittelt. Nach Unterschreiten eines vorwählbaren, max. zulässigen Abstandes der Bearbeitungseinheit 3 von dem zu bearbeitenden Anschlußort am Fahrwegträger 1 wird die Bearbeitungseinheit 3 gestoppt und mit dem Fahrwegträger 1 verspannt. Hiernach erfolgt ausgehend von der im Rechner der Bearbeitungseinheit 3 ermittelten Differenzlage der Bearbeitungsköpfe 36 in Relation zu den Anschlußorten die Verschiebung und Positionierung der Bearbeitungsköpfe 36 in den Anschlußorten, wonach der Bearbeitungsvorgang eingeleitet wird.

Die Bearbeitung weiterer Anschlußorte erfolgt, indem die Bearbeitungseinheit 3 auf der Grundlage der in ihrem Rechner gespeicherten Daten auf den neuen Anschlußort unter Nutzung eines inkrementalen Wegmeßsystems zubewegt und nach Erreichen einer vorgegebenen Positionierung gestoppt und am Fahrwegträger 1 arretiert wird.

Danach werden unter Bezugnahme auf die über die Ortungs- und Meßeinheit 4 ermittelte Position der Bearbeitungseinheit 3 die Bearbeitungsköpfe 36 justiert und der Bearbeitungsprozeß anhand der gespeicherten Parameter in Gang gesetzt.

Ist die Bearbeitung eines Fahrwegträgers 1 abgeschlossen, erfolgt eine Trennung der Bearbeitungseinheit 3 vom Fahrwegträger 1, indem die Stützen 38 der Bearbeitungseinheit 3 ausgefahren werden. Die Bearbeitungseinheit 3 verläßt den Bereich des bearbeiteten Fahrwegträgers 1 und steht für eine Bearbeitung weiterer Fahrwegträger 1 zur Verfügung.

### Bezugszeichenliste

- 1: Fahrwegträger
- 11: Deckblech
- 12: Gleitebenen
- 13: Seitenführungsschienen
- 2: Trägeraufnahmevorrichtung
- 21: Trägeraufnahme
- 3: Bearbeitungseinheit
- 31: Antriebsrollen
- 32: Nachlaufrollen
- 33: Führungsrollen
- 34: Hydraulikzylinder
- 35: Werkzeuge
- 36: Bearbeitungskopf
- 37: Grundrahmen
- 38: Teleskopierbare Stützen
- 39: Rollen (an diesen Stützen)
- 4: Ortungs- und Meßeinheit
- 41: Profilkörper
- 5: Statorpakete

## Patentansprüche

1. Verfahren zum lagegenauen Einbringen von Befestigungsmitteln in Anschlußkörper einer Tragkonstruktion von Fahrwegen für spurgebundene Transportsysteme, insbesondere Magnetschwebebahnen, bei dem im Zusammenhang mit der Fertigung der Tragkonstruktion die Koordinaten der Anschlußorte der Befestigungsmittel bestimmt werden, anhand derer eine Positionierung der Bearbeitungswerkzeuge erfolgt, dadurch gekennzeichnet, daß in Vorbereitung des Einbringens der Befestigungsmittel in die Tragkonstruktion die tatsächliche räumliche Lage der Tragkonstruktion bestimmt wird, daß diese Lage mit der Fertigungslage der Tragkonstruktion verglichen und aus beiden Raumlagen eine Differenzlage ermittelt wird, daß weiterhin aus dieser Differenzlage die Lageänderung der Anschlußorte der einzubringenden Befestigungsmittel im Vergleich zu den bei der Fertigung der Tragkonstruktion festgelegten Anschlußorten bestimmt wird, wonach korrigierte Koordinaten der Anschlußorte der Befestigungsmittel generiert werden.

2. Verfahren nach Anspruch 1, dadurch gekennzeichnet, daß bei der Fertigung der Tragkonstruktion des Fahrweges an der Tragkonstruktion Referenzstellen festgelegt werden, so daß über Distanz- und Neigungsmessung die Bestimmung der jeweiligen Ist-Lage der Tragkonstruktion für weitere Bearbeitungs- und ggf. Montageprozesse erfolgen kann.

3. Verfahren nach Anspruch 1 oder 2, dadurch gekennzeichnet, daß bei Einsatz von Bearbeitungseinheiten, die einen, relativ zu einem Grundrahmen bewegbaren Bearbeitungskopf tragen, die Differenzlage des Grundrahmens zu dem theoretisch ermittelten Anschlußort bestimmt wird und der Bearbeitungskopf relativ zum Grundrahmen in die Bearbeitungsposition gebracht wird.

4. Verfahren nach Anspruch 3, dadurch gekennzeichnet, daß auf dem Grundrahmen der Bearbeitungseinheit Referenzflächen festgelegt werden, so daß über eine Distanz- und Neigungsmessung zu diesen Referenzflächen die Bestimmung der jeweiligen Ist-Lage des Grundrahmens für den betreffenden Bearbeitungsprozeß erfolgen kann.

5. Verfahren nach Anspruch 1 oder 3, dadurch gekennzeichnet, daß die Bearbeitungseinheit zum Erreichen mehrerer, längs der Tragkonstruktion verteilter Anschlußorte für Ausrüstungsteile und Funktionsflächen auf der Tragkonstruktion des Fahrweges verschoben und zum Einbringen der Befestigungsmittel mit der Tragkonstruktion verspannt wird.

6. Vorrichtung zum lagegenauen Einbringen von Befestigungsmitteln in Anschlusskörper einer Tragkonstruktion von Fahrwegen für spurgebundene Transportsysteme, insbesondere Magnetschwebebahnen, mit einer Bearbeitungseinheit, die längs der Tragkonstruktion des Fahrweges verschiebbar und in Vorbereitung des Einbringens der Befestigungsmittel positionierbar ist, **dadurch gekennzeichnet,** dass an der Tragkonstruktion (1) und/oder der Bearbeitungseinheit (3) Kopplungselemente (31, 32, 33, 34) derart vorgesehen sind, dass die zu bearbeitende Tragkonstruktion (1) als Widerlager für die Bearbeitungseinheit (3) bei deren Positionierung in den Anschlussorten wirkt und dass der Bearbeitungseinheit (3) eine Ortungs- und Messeinheit (4) zugeordnet ist, deren Bewegung längs zur Tragkonstruktion (1) auf einem Profilkörper (41) erfolgt.

7. Vorrichtung nach Anspruch 6, dadurch gekennzeichnet, daß sich die Bearbeitungseinheit (3) bei ihrer Verschiebung mit der zu bearbeitenden Tragkonstruktion (1) über Kopplungselemente (31, 32, 33) im Eingriff befindet.

8. Vorrichtung nach Anspruch 7, dadurch gekennzeichnet, daß auf der Oberseite der Tragkonstruktion (1) in Längsrichtung Stützflächen (12) ausgebildet sind, auf denen mit der Bearbeitungseinheit (3) verbundene und diese tragende Rollen (31, 32) bewegbar sind.

9. Vorrichtung nach Anspruch 7 oder 8, dadurch gekennzeichnet, daß an den Seitenflächen der Tragkonstruktion (1) Führungsbahnen (13) vorgesehen sind, auf denen mit der Bearbeitungseinheit (3) verbundene Rollen (33) bewegbar sind.

10. Vorrichtung nach Anspruch 6, dadurch gekennzeichnet, daß die Tragkonstruktion (1) des Fahrweges und/oder die Bearbeitungseinheit (3) Spannmittel (34) aufweist, die nach erfolgter Positionierung der Bearbeitungseinheit (3) einen Formschluß zwischen Tragkonstruktion (1) und Bearbeitungseinheit (3) in Bearbeitungsrichtung herbeiführen.

11. Vorrichtung nach Anspruch 6, gekennzeichnet durch eine verfahrbar ausgebildete Bearbeitungseinheit (3), wenn sich diese in einem von der Tragkonstruktion (1) entkoppelten Zustand befindet.

12. Vorrichtung nach Anspruch 6, dadurch gekennzeichnet, daß in Verlängerung der Tragkonstruktion (1) eine Parkstation zur Aufnahme der Bearbeitungseinheit (3) vorgesehen ist.

13. Vorrichtung nach Anspruch 12, dadurch gekennzeichnet, daß die Parkstation verfahrbar ausgebildet ist.

14. Vorrichtung nach Anspruch 6, dadurch gekennzeichnet, daß die Bewegung der Ortungs- und Meßeinheit (4) auf einem Profilkörper (41) erfolgt.

15. Vorrichtung nach Anspruch 6, dadurch gekennzeichnet, daß die Bearbeitungseinheit (3) einen Grundrahmen (37) und einen relativ zum Grundrahmen (37) verfahrbaren, mit Werkzeugen (35) versehenen Bearbeitungskopf (36) aufweist.

## Claims

1. A method for exact positioning of fastening means into mounting bodies of a support structure of track systems for track-bound transport systems, in particular for magnetic levitation trains, in which in conjunction with the manufacture of the support structure the coordinates of the connecting locations of the fastening means are determined, on the basis of which a positioning of the machining tools is effected, characterized in that in preparation for the placing of said fastening means into the support structure the actual spatial position of the support structure is determined, and that this position is compared with the manufacturing position of the support structure, and that a differential spatial position is determined from these two spatial positions, and furthermore that the positional change of the connecting locations of the fastening means to be applied is determined from this differential spatial position in comparison to the connecting locations stipulated on manufacture of the support structure, whereupon corrected coordinates of the connecting locations of said fastening means are generated.

2. A method pursuant to Claim 1, characterized in that during the manufacture of the support structure of the track s ystem reference points are fixed at the support structure so that the determination of the relevant actual position of the support structure can be effected for other machining and, if required, mounting procedures via a distance and slant measurement.

3. A method pursuant to Claim 1 or 2, characterized in that for the use of machining units carrying a machining head displaceable relative to a base frame the differential position of the base frame in relation to a theoretically determined connecting location is determined and that the machining head is brought into the machining position relative to the base frame

4. A method pursuant to Claim 3, characterized in that reference surfaces are stipulated on the base frame of the machining unit so that the determination of the relevant actual position of the base frame for the relevant machining process can be effected via a distance and slant measurement in relation to these reference surfaces.

5. A method pursuant to Claim 1 or 3, characterized in that the machining unit is displaced to reach several connecting locations spread along the support structure for equipment components and functional areas on the support structure of the track system and that it is clamped with the support structure for placing the fastening means.

6. A device for exact positioning of fastening means into mounting bodies of a support structure of track systems for track-bound transport systems, in particular for magnetic levitation trains, equipped with a machining unit which is displaceable along the support structure of the track system and which can be positioned in preparation for the placing of fastening means, characterized in that coupling elements (31,32,33,34) are provided at the track support (1) and/or machining unit (3) in such a manner that the track support (1) to be machined acts as an abutment for the machining unit (3) on its positioning in the connecting locations, and that a locating and measuring unit (4) is allocated to said machining unit (3), the movement of said locating and measuring unit (4) proceeding along the track support (1) on a profiled body (41).

7. A device pursuant to Claim 6, characterized in that the machining unit (3) engages during its displacement with said coupling elements (31,32,33) said track support (1) to be machined.

8. A device pursuant to Claim 7, characterized in that support surfaces are configured on the upper side of said track support (1) in longitudinal direction on which rollers (31,32) connected to the machining unit (3) and carrying it are movable.

9. A device pursuant to Claim 7 or 8, characterized in that the lateral surfaces of the track support (1) are provided with guide tracks (13) on which rollers (33) connected to the machining unit (3) are movable.

10. A device pursuant to Claim 6, characterized in that the track support (1) of the track system and/or machining unit (3) are equipped with clamping means (34) which accomplish a form-locking connection between track support (1) and machining unit (3) in the direction of machining after positioning of the machining unit (3).

11. A device pursuant to Claim 6, characterized in that said machining unit (3) is driveable when uncoupled from the track support (1).

12. A device pursuant to Claim 6, characterized in that a parking station to take-up said machining unit (3) is provided in the extension of said track support (1).

13. A device pursuant to Claim 12, characterized in that said parking station is movable.

14. A device pursuant to Claim 6, characterized in that the movement of the locating and measuring unit (4) is accomplished on a profiled body (41).

15. A device pursuant to Claim 6, characterized in that said machining unit (3) is provided with a base frame 837) and a machining head (36) which is movable relative to the base frame (37) and equipped with tools (35).

## Revendications

1. Procédé de positionnement des moyens de fixation dans des corps de jonction d'une structure de support de rail pour systèmes de transport guidés sur rail, en particulier pour véhicules ferroviaires à lévitation magnétique, selon lequel sont déterminées, en rapport avec la fabrication de la structure de support, les coordonnées des points de jonction des moyens de fixation au moyen desquels est effectué un positionnement des outils d'usinage, **caractérisé en ce que**, pour préparer la mise en place des moyens de fixation dans la structure de support, la position réelle dans l'espace de la structure de support est déterminée, que cette position est comparée à la position de fabrication de la structure de support et qu'une position différentielle est déterminée à partir de ces deux dimensions dans l'espace, qu'à partir de cette position différentielle la modification de la position des points de jonction des moyens de fixation à mettre en place est en outre déterminée par rapport aux points de jonction déterminés lors de la fabrication de la structure de support, suite à quoi sont générées des coordonnées corrigées des points de jonction des moyens de fixation.

2. Dispositif selon la revendication 1, **caractérisé en ce que** lors de la fabrication de la structure de support du rail, des points de référence sont définis sur la structure de support de manière à pouvoir déterminer la position réelle respective de la structure de support via une mesure de la distance et de l'inclinaison en vue d'opérations ultérieures d'usinage et de montage s'il y a lieu.

3. Procédé selon la revendication 1 ou 2, **caractérisé en ce que** lors de l'utilisation d'unités d'usinage équipées d'une tête d'usinage se déplaçant par rapport à un cadre de base, la position différentielle du cadre de base est déterminée par rapport au point de jonction calculé théoriquement et que la tête d'usinage est amenée en position d'usinage par rapport au cadre de base.

4. Procédé selon la revendication 3, **caractérisé en ce que** des surfaces de référence sont fixées sur le cadre de base de l'unité d'usinage de manière à déterminer la position respective du cadre de base via une mesure de la distance et de l'inclinaison par rapport aux surfaces de référence en vue de l'opération d'usinage concernée.

5. Procédé selon la revendication 1 ou 3, **caractérisé en ce que** l'unité d'usinage est déplacée sur la structure de support du rail pour atteindre plusieurs points de jonction pour pièces d'équipement et surfaces fonctionnelles et qu'elle est fixée à la structure de support pour mettre en place les moyens de fixation.

6. Dispositif de positionnement des moyens de fixation dans des corps de jonction d'une structure de support de rail pour systèmes de transport guidés sur rail, en particulier pour véhicules ferroviaires à lévitation magnétique, avec une unité d'usinage, qui se déplace le long de la structure de support du rail et qui peut être positionnée pour préparer la mise en place des moyens de fixation, **caractérisé en ce que** des éléments de couplage (31, 32, 33, 34) sont prévus sur la structure de support (1) et/ou sur l'unité d'usinage (3) de manière telle que la structure de support à usiner (1) fasse effet de butée pour l'unité d'usinage (3) lors de son positionnement aux points de jonction et qu'une unité de repérage et de mesurage (4), qui se déplace sur un corps profilé (41) le long de la structure de support (1), soit affectée à l'unité d'usinage (3).

7. Dispositif selon la revendication 6, **caractérisé en ce que** l'unité d'usinage (3) est en prise avec la structure de support (1) à usiner via des éléments de couplage (31, 32, 33) lors de son déplacement.

8. Dispositif selon la revendication 7, **caractérisé en ce que** des surfaces d'appui (12) sont formées dans le sens longitudinal, sur la face supérieure de la structure de support (1), des galets (31, 32) reliés à l'unité d'usinage (3) et portant cette dernière se déplaçant sur lesdites surfaces d'appui.

9. Dispositif selon la revendication 7 ou 8, **caractérisé en ce que** des bandes de guidage (13), sur lesquelles se déplacent des galets (33) reliés à l'unité d'usinage (3), sont prévues sur les faces latérales de la structure de support (1).

10. Dispositif selon la revendication 6, **caractérisé en ce que** la structure de support (1) du rail et/ou l'unité d'usinage (3) présentent des moyens de serrage (34), qui, une fois que le positionnement de l'unité d'usinage est effectué (3), génèrent une fermeture géométrique entre la structure de support (1) et l'unité d'usinage (3) dans le sens d'usinage.

11. Dispositif selon la revendication 6, **caractérisé par** une unité d'usinage mobile (3) qui est constituée lorsque celle-ci se trouve dans un état désaccouplé de la structure de support (1).

12. Dispositif selon la revendication 6, **caractérisé en ce qu'**une station de garage est prévue pour la réception de l'unité d'usinage (3) en prolongation de la structure de support (1).

13. Dispositif selon la revendication 12, **caractérisé en ce que** la station de garage est mobile.

14. Dispositif selon la revendication 12, **caractérisé en ce que** le mouvement de l'unité de repérage et de mesurage (4) se fait sur un corps profilé (41).

15. Dispositif selon la revendication 6, **caractérisé en ce que** l'unité d'usinage (3) présente un cadre de base (37) et une tête d'usinage (36) équipée d'outils (35) et déplaçable par rapport au cadre de base (37).
